(19) **Europäisches Patentamt / European Patent Office / Office européen des brevets**

(11) **EP 2 303 522 B1**

(12) **FASCICULE DE BREVET EUROPEEN**

(45) Date de publication et mention de la délivrance du brevet:
**18.10.2017 Bulletin 2017/42**

(21) Numéro de dépôt: **09779932.4**

(22) Date de dépôt: **24.06.2009**

(51) Int Cl.:
**B25J 9/16** (2006.01)        **A61H 3/00** (2006.01)
**B25J 9/00** (2006.01)

(86) Numéro de dépôt international:
**PCT/EP2009/057930**

(87) Numéro de publication internationale:
**WO 2010/003824 (14.01.2010 Gazette 2010/02)**

(54) **SYSTÈME ET PROCÈDE AUTONOME DE DÉTERMINATION D'INFORMATIONS REPRÉSENTATIVES DU MOUVEMENT D'UNE CHAÎNE ARTICULÉE**

AUTONOMES SYSTEM UND VERFAHREN ZUR DEFINITION VON CHARAKTERISTISCHEN INFORMATIONEN DER BEWEGUNG EINER GELENKKETTE

AUTONOMOUS SYSTEM AND METHOD FOR DETERMINING INFORMATION REPRESENTATIVE OF THE MOVEMENT OF AN ARTICULATED CHAIN

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **27.06.2008 FR 0803635**

(43) Date de publication de la demande:
**06.04.2011 Bulletin 2011/14**

(73) Titulaires:
• **Movea**
  **38000 Grenoble (FR)**
• **COMMISSARIAT À L'ÉNERGIE ATOMIQUE ET AUX ÉNERGIES ALTERNATIVES**
  **75015 Paris (FR)**

(72) Inventeurs:
• **CARITU, Yanis**
  **F-38134 Saint Joseph La Riviere (FR)**
• **GODIN, Christelle**
  **F-38190 Brignoud (FR)**

(74) Mandataire: **Brunelli, Gérald**
  **Marks & Clerk France**
  **Immeuble Visium**
  **22, avenue Aristide Briand**
  **94117 Arcueil Cedex (FR)**

(56) Documents cités:
**EP-A- 1 721 593     US-A1- 2006 130 594**

## Description

L'invention porte sur un système et un procédé autonome de détermination d'informations représentatives du mouvement d'une chaîne articulée.

La capture de mouvement d'une chaîne articulée, telle un robot ou un humain est une technique utilisée dans de nombreuses applications, par exemple l'analyse biomécanique, la télémanipulation, l'animation de personnages virtuels, ou les interfaces homme-machine par le geste dans lesquelles la chaîne articulée est généralement un membre supérieur comprenant un bras, un avant-bras et une main.

Il existe des dispositifs comprenant deux parties distinctes, l'une placée sur un objet en mouvement, et l'autre fixe par rapport au mouvement de l'objet. Un tel dispositif est décrit dans le document EP 357 774 A1 pour une chaîne linéaire non-articulée. Ce type de dispositif nécessitent d'installer du matériel à la fois sur l'objet et dans l'environnement de l'objet, ce qui entraîne des problèmes en cas de présence d'obstacles entre ces différents matériels, et limite la portée d'un tel dispositif. Le temps d'installation et de calibration est long, et le coût élevé.

Il existe également des dispositifs très répandus, basés sur l'optique, tels que décrits par exemple dans les documents US 2003/0215130A1 et US 2005/00883333 A1, permettant de reconstruire les mouvements du corps à partir d'images vues par des caméras placées tout autour du déroulement du mouvement du corps. Des marqueurs très visibles sont disposés sur l'objet en mouvement. Un traitement effectué par un outil informatique permet de déterminer la position en trois dimensions, ou 3D, de chaque marqueur, par le principe de stéréoscopie. Toutefois, les problèmes d'occlusion optique restent nombreux, ce qui rend élevé le nombre minimal de caméras utilisé.

Certains auteurs proposent de réduire ce type d'inconvénients, comme cela apparaît, par exemple, dans le document "Skeleton-Based Motion Capture for Robust Reconstruction of Human Motion" (L. Herda; P. Fua; R. Plänkers; R. Boulic; D. Thalmann, Computer Graph lab (LIG), EPFL - web 01/2000). D'autres auteurs proposent des méthodes de traitement basées sur la silhouette extraite à partir d'une seule caméra en lui associant un modèle de l'objet en mouvement, par exemple dans le document "Marker-free Kinematic Skeleton Estimation from Sequences of Volume Data" (C. Theobalt; E. Aguiar; M. Magnor; H. Theisel; H-P. Seidel; MPI Informatik).

Toutefois, même si ces inconvénients sont réduits, ils perdurent.

Les systèmes basés sur l'électromagnétisme reconstruisent les angles et les positions des capteurs disposés sur l'objet;

Les systèmes à ultrasons, de même que les systèmes optiques, retrouvent les positions des émetteurs. Ces deux technologies souffrent de la même limitation dans l'espace que les systèmes à base de caméras.

D'autres dispositifs existent, en un seul bloc, disposés sur l'objet ou corps mobile, tels les exosquelettes, qui mettent en oeuvre une reconstruction du mouvement à partir de mesures d'angles effectuées par des capteurs d'angles disposés aux articulations. Ces dispositifs permettent de s'affranchir de la limitation spatiale de la capture de mouvement. Toutefois, ces dispositifs sont contraignants car ils comprennent des bras et/ou jambes articulées mécaniques disposés sur la structure ou la personne, d'une masse et d'une gêne considérables.

D'autres dispositifs, par exemple décrits dans le document FR2897680, utilisent des capteurs inertiomagnétiques, tels des gyromètres, des accéléromètres, ou des magnétomètres, et mettent en oeuvre des calculs d'angles inter-segments ou éléments solides de la chaîne articulée, qui permettent de reconstruire le mouvement complet de la chaîne articulée. C'est un dispositif aisé à réaliser.

Un but de l'invention est de proposer une alternative aux dispositifs précités, à coût et complexité réduits.

Il est proposé, selon un aspect de l'invention, un système autonome de détermination d'informations représentatives du mouvement d'une chaîne articulée comprenant au moins deux éléments solides et au moins une articulation reliant lesdits deux éléments, ledit système comprenant :

- au moins deux dispositifs de mesure de distances inter-dispositifs, montés fixement sur au moins deux éléments distincts de ladite chaîne articulée ;
- des moyens de détermination d'au moins une distance séparant deux dispositifs de mesure à partir d'au moins une mesure fournie par un dispositif de mesure ; et
- des moyens de calculs adaptés pour calculer des informations représentatives du mouvement de ladite chaîne articulée à partir des distances transmises par lesdits moyens de détermination de distances.

Un tel système est autonome et n'est pas soumis à des problèmes d'occlusion optique, ni de détection visuelle de marqueurs visibles, rendue difficile en extérieur. En outre, un tel système est de coût réduit et de gêne d'utilisation très limitée.

Selon un mode de réalisation, au moins un desdits dispositifs de mesure de distances inter-dispositifs inclut des moyens de détermination d'une distance séparant le dispositif considéré et un autre dispositif. Dans ce cas, la mesure fournit par le dispositif est directement une mesure de distance.

Selon une variante de réalisation, les moyens de détermination d'au moins une distance séparant deux dispositifs de mesure sont distincts de ces dispositifs de mesures. Dans ce cas, au moins un des deux dispositifs de mesure doit transmettre une mesure (signal radio, optique, vidéo...) aux moyens de détermination de distances déportés.

Selon un mode de réalisation, au moins un desdits dispositifs de mesure de distances inter-dispositifs est adapté pour émettre et/ou recevoir des données.

Cette émission/réception peut être utilisée pour la mesure de distance en tant que telle. La distance est calculée par un mode de détection d'impulsions radiofréquences et d'estimation de différence de temps d'arrivée ou "Time Différence Of Arrival" ou TDOA en langue anglo-saxonne, ou d'estimation de puissance reçue ou "Received Signal Strength Indication" en langue anglo-saxonne, ou d'estimation du temps d'arrivée "Time Of Arrival" TOA en langue anglo-saxonne.

En outre, une unité de mesure de distance peut avantageusement recevoir par radio des consignes de niveau de précision à rendre. En effet, la reconstruction de la chaîne articulée a un conditionnement qui dépend de la configuration géométrique elle-même. Ainsi, on peut ajuster ce niveau de précision à la hausse pour améliorer la performance du système, ou à la baisse pour réduire la consommation d'énergie du système et le coût de réalisation du système.

Enfin, les données de mesures peuvent être transmises directement à une unité mobile proche, susceptible de contenir une puissance de calcul plus importante que celle embarquée.

Selon un mode de réalisation, le système comprend en outre au moins un accéléromètre et/ou un gyromètre et/ou un magnétomètre fournissant des mesures complémentaires utilisées par les moyens de calcul.

La mesure de distance est une donnée statique, tandis que la mesure inertielle, par gyromètre ou accéléromètre, est une donnée dynamique, i.e. mettant en oeuvre des paramètres d'ordre un et deux du mouvement, tels la vitesse angulaire et l'accélération. Ces mesures sont donc très complémentaires pour une meilleure reconstruction du mouvement. Le magnétomètre, quant à lui, donne pour chaque point une information d'inclinaison par rapport à une direction fixe de l'espace, celle du champ magnétique terrestre.

Dans un mode de réalisation, le système comprend au moins un dispositif optique de mesure de distances inter-dispositifs.

Ainsi, la distance fournie est d'une précision améliorée par rapport à celle fournie par un dispositif radiofréquences.

Selon un mode de réalisation, le système comprend des moyens de mémorisation, montés sur ladite chaîne articulée, adaptés pour mémoriser lesdites informations représentatives du mouvement de ladite chaîne articulée délivrées par lesdits moyens de calcul ou pour mémoriser directement lesdites distances inter-dispositifs précédemment déterminées.

Les informations peuvent ainsi être mémorisées pour une exploitation à postériori du mouvement, ou pour une transmission en temps réel à une station externe exploitant les données représentatives du mouvement, par exemple pour affichage et/ou analyse, ou pourvue de moyens de calcul permettant de reconstruire le mouvement de la chaîne articulée, à partir des distances inter-dispositifs.

Par exemple, lesdits dispositifs de mesures de distances inter-dispositifs sont montés fixement sur lesdits éléments solides de ladite chaîne articulée de sorte que, pour une articulation, la somme, pour l'ensemble desdits dispositifs de mesure de distances inter-dispositifs montés sur un élément solide lié à ladite articulation, des distances séparant un dispositif de mesure et l'articulation, soit maximale.

Pour un nombre donné de dispositifs de mesure de distances inter-dispositifs, la précision du système est maximisée.

Par exemple, lesdits dispositifs de mesures de distances inter-dispositifs sont montés sur lesdits éléments solides de ladite chaîne articulée de sorte que les distances entre des dispositifs disposés sur un même élément solide soient maximales.

Par exemple, ladite chaîne articulée comprenant au moins trois éléments solides. Un élément solide de ladite chaîne articulée lié à deux articulations comprend un dispositif de mesure de distances inter-dispositifs disposé sensiblement au milieu dudit élément solide.

Il s'agit d'un compromis pour maximiser la distance par rapport aux deux articulations auxquelles l'élément solide est relié. Ce mode de réalisation est particulièrement intéressant lorsque l'on souhaite mettre un seul dispositif par segment solide pour limiter les coûts.

Dans un mode de réalisation, le système comprend au moins un dispositif de mesure de distances inter-dispositifs par élément solide de la chaîne articulée et par degré de liberté en rotation ou en translation d'une articulation liée à l'élément solide, ladite chaîne étant dépourvue de portion fermée, lesdits dispositifs de mesure de distances inter-dispositifs sont disposés sur l'élément solide de sorte que la relation suivante soit vérifiée :

$$NEQ \geq NVAR$$

dans laquelle :

NEQ représente le nombre d'équations reliant aux mesures de distance les variables de position inconnues de l'extrémité de chaque segment mû par une articulation de la chaîne articulée ; et
NVAR représente le nombre desdites variables de position inconnues.

Dans un mode de réalisation, le système comprend au moins un dispositif de mesure de distances inter-dispositifs par élément solide de la chaîne articulée et par degré de liberté en rotation d'une articulation liée à l'élément solide, lesdits dispositifs de mesure étant disposés sur l'élément solide de sorte que le vecteur reliant de l'articulation à un dispositif soit linéairement indépendant du ou des vecteurs reliant l'articulation aux autres dispositifs de mesure.

Par exemple, le système comprend au moins un élément solide relié à une articulation et muni d'au moins deux dispositifs de mesure de distances inter-dispositifs, lesdits dispositifs de mesure étant disposés sur ledit élément solide de sorte qu'ils évitent de former une droite avec l'articulation.

Par exemple, le système comprend au moins un élément solide relié à une articulation et muni d'au moins trois dispositifs de mesure de distances inter-dispositifs, lesdits dispositifs de mesure étant disposés sur ledit élément solide de sorte qu'ils évitent de former un plan avec l'articulation.

Ainsi, on a une configuration qui peut fonctionner quel que soit le nombre de degrés de libertés des articulations, et notamment lorsque des articulations du système ont trois degrés de liberté en rotation.

Selon un mode de réalisation, lesdits dispositifs de mesure de distance inter-dispositifs comprennent une distance de seuil maximale mesurable.

Il est ainsi possible de limiter le nombre de données à mémoriser et à traiter, et de limiter la consommation énergétique du système.

Dans un mode de réalisation, le système comprend, en outre, des moyens de transmission, montés sur ladite chaîne articulée, pour transmettre des informations représentatives du mouvement de ladite chaîne articulée ou des distances inter-dispositifs mémorisées dans lesdits moyens de mémorisation.

Il est ainsi possible de transmettre ces informations à une unité de commande électronique externe ou embarquée, capable de reconstruire le mouvement de la chaîne articulée.

Selon un mode de réalisation, lesdits dispositifs de mesure de distances inter-dispositifs et/ou lesdits moyens de calcul, et/ou lesdits moyens de mémorisation, et/ou lesdits moyens de transmission sont adaptés pour fonctionner sur un corps vivant considéré comme ladite chaîne articulée.

L'invention peut être appliquée à un corps humain ou animal.

Selon un autre aspect de l'invention, il est également proposé un procédé de détermination d'informations représentatives du mouvement d'une chaîne articulée comprenant au moins deux éléments solides et au moins une articulation reliant lesdits deux éléments, le procédé comprenant les étapes suivantes :

- monter fixement au moins deux dispositifs de mesure de distances intyer-dispositifs sur au moins deux éléments solides distincts de la chaîne articulée ;
- déterminer au moins une distance séparant deux dispositifs de mesure à partir d'au moins une mesure fournie par un dispositif de mesure ; et
- calculer des informations représentatives du mouvement de ladite chaîne articulée à partir des distances précédemment déterminées.

L'invention sera mieux comprise à l'étude de quelques modes de réalisation décrits à titre d'exemples nullement limitatifs et illustrés par les dessins annexés sur lesquels :

- la figure 1 illustre schématiquement un mode de réalisation d'un système selon un aspect de l'invention ;
- la figure 2 illustre schématiquement un autre mode de réalisation selon un aspect de l'invention ;
- la figure 3 illustre schématiquement un autre mode de réalisation selon un aspect de l'invention ; et
- les figures 4a, 4b et 4c illustrent schématiquement la reconstruction du mouvement d'une chaîne articulée selon un aspect de l'invention.

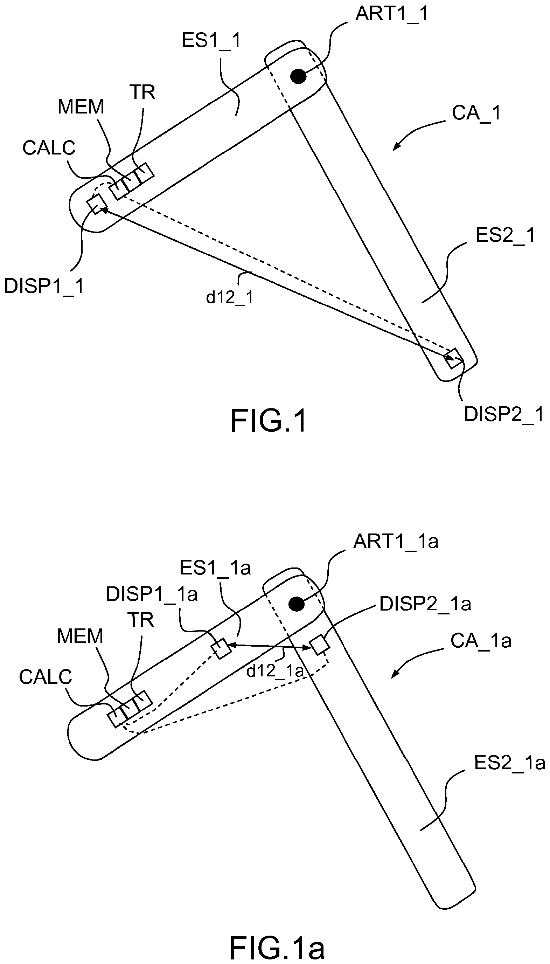

Sur la figure 1 est représenté une première chaîne articulée CA_1 munie d'un système autonome de détermination d'informations représentatives du mouvement de la chaîne articulée CA_1, selon un aspect de l'invention. La première chaîne articulée CA_1 comprend deux éléments solides, ici des segments solides ES1_1 et ES2_1, et une première articulation ART1_1 à un degré de liberté. En variante, les éléments solides de la chaîne articulée peuvent être de forme quelconque.

Dans la première chaîne articulée CA_1, le premier élément solide ES1_1 comprend un premier dispositif DISP1_1 de mesure de distances inter-dispositifs, et le deuxième élément solide ES2_1 comprend un deuxième dispositif DISP2_1 de mesure de distances inter-dispositifs.

Ainsi le système permet de déterminer la distance d12_1 séparant les premier et deuxième dispositifs DISP1_1 et DISP2_1.

Les dispositifs DISP1_1 et DISP2_1, ainsi que l'ensemble de ces dispositifs décrits dans la présente demande de brevet peuvent, par exemple, utiliser des principes sans contact de détermination de distance, de type radar par impulsion radio et écho ou par réception et calcul de la distance à partir du temps de propagation, de la puissance reçue, ou par effet Doppler, de types infrarouges, vidéos, ou électromagnétiques.

Cette distance d12_1 est délivrée par l'un des deux, ou les deux dispositifs DISP1_1 et DISP2_1, par exemple par transmission sans fil, à un module de calcul CALC disposé sur la première chaîne articulée CA_1. Le module de calcul CALC est capable de calculer des informations représentatives du mouvement de la première chaîne articulée CA_1, à partir des mesures transmises par les dispositifs de mesure de distances inter-dispositifs DISP1_1 et DISP2_1. Ces informations peuvent être des distances séparant tout ou partie sélectionnée judicieusement des distances inter-dispositifs, ou des informations calculées représentant des états du mouvement de la chaîne articulée.

Par exemple, l'un des deux dispositifs peut être émetteur et l'autre récepteur lié ou comprenant le module de calcul.

Chaque dispositif peut être soit passif, soit actif. Dans le cas par exemple des systèmes de type radar, le dispositif émetteur est actif et l'autre dispositif constitué uniquement d'un réflecteur est passif.

Ces informations peuvent être mémorisées dans un module de mémorisation MEM, et transmises par un module de transmission TR, soit sensiblement en temps réel, soit après la fin d'un déplacement de la première chaîne articulée CA_1, par exemple à une unité de commande électronique externe capable, à partir de ces informations, de reconstruire ou déterminer le mouvement de la première chaîne articulée CA_1. Dans le cas d'un humain ou d'un robot humanoïde, le post-traitement effectué peut intégrer un modèle permettant de détecter la pose des pieds et donc le mouvement global d'une personne ou d'un robot humanoïde qui marche ou court. Le système peut être utilisé en combinaison avec un système permettant de définir la position d'un point de la chaîne articulée.

Sur l'exemple de la figure 1, les deux dispositifs DISP1_1 et DISP2_1 sont disposés de sorte que la somme, pour l'ensemble des dispositifs DISP1_1 et DISP2_1, des distances séparant un dispositif DISP1_1, DISP2_1 de l'articulation ART1_1 liée à l'élément solide ES1_1, ES2_1 sur lequel est monté le dispositif DISP1_1, DISP2_1, soit maximale.

En variante, le module de calcul CALC, et/ou le module de mémorisation MEM, et/ou le module de transmission TR peuvent être joint ou intégrés au dispositif DISP1_1 de mesure de distances inter-dispositifs.

Tel qu'illustré en comparaison sur le système de la figure 1a, sur laquelle une chaîne articulée comprend deux éléments solides, ici des segments solides ES1_1a et ES2_1a, et une première articulation ART1_1a à un degré de liberté. Les modules de calcul CALC, de mémorisation MEM et de transmission TR sont identiques et donc pareillement référencés. Sur la figure 1a, les deux dispositifs DISP1_1a et DISP2_1a sont disposés à proximité de l'articulation ART1_1a.

Aussi, pour une incertitude de mesure considérée comme identique, dans le cas où les dispositifs DISP1_1 et DISP2_1 de la figure1 sont identiques aux dispositifs DISP1_1a et DISP2_1a de la figure 1a, l'erreur sur la distance d12_1a de la figure 1a est la même que celle sur la distance d12_1 de la figure 1. Or cette erreur de même valeur sur les distances d12_1a de la figure 1 a et d12_1 de la figure 1, implique une erreur angulaire correspondante supérieure dans le cas de la figure 1a, car les dispositifs DISP1_1a et DISP2_1a sont disposés à proximité de l'articulation ART1_1a, en comparaison à l'erreur angulaire correspondante dans le cas de la figure 1.

En variante, si l'articulation ART1_1 avait deux degrés de liberté, deux dispositifs de mesure de distances inter-dispositifs seraient disposés sur chacun des éléments solides ES1_1 et ES1_2, de sorte que l'articulation ART1_1, et les deux dispositifs d'un même élément solide ne soient pas alignés. Cette variante s'applique à toute articulation à deux degrés de liberté angulaires d'une chaîne articulée quelconque.

En variante, si l'articulation ART1_1 avait trois degrés de liberté, trois dispositifs de mesure de distances inter-dispositifs seraient disposés sur chacun des éléments solides ES1_1 et ES1_2, de sorte que l'articulation ART1_1, et les trois dispositifs d'un même élément solide ne soient pas coplanaires. Cette variante s'applique à toute articulation à trois degrés de liberté d'une chaîne articulée quelconque.

Généralement, une articulation du corps humain, telle un genou ou un coude, est considérée comme une articulation a un degré de liberté, et plus rarement comme une articulation à 2 degrés de liberté.

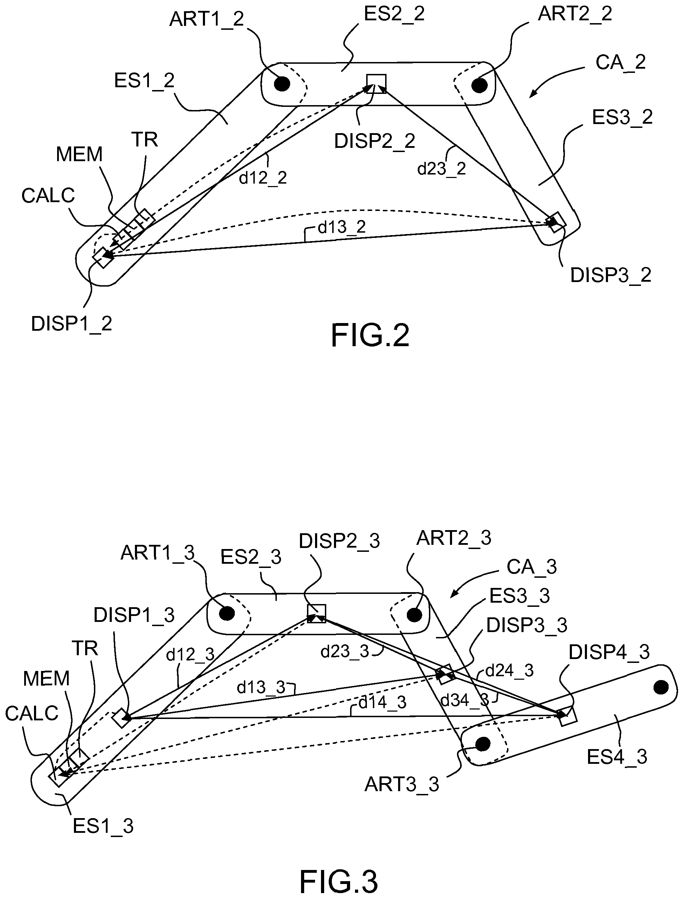

Sur la figure 2 est représentée une deuxième chaîne articulée CA_2 munie d'un système autonome de détermination d'informations représentatives du mouvement de la chaîne articulée CA_2, selon un aspect de l'invention. La deuxième chaîne articulée CA_2 comprend trois éléments solides, ici des segments solides ES1_2, ES2_2 et ES3_2, ainsi qu'une première articulation ART1_2 et une deuxième articulation ART2_2 à un degré de liberté. En variante, les éléments solides de la chaîne articulée peuvent être de forme quelconque.

Dans la deuxième chaîne articulée CA_2, le premier élément solide ES1_2 comprend un premier dispositif DISP1_2 de mesure de distances inter-dispositifs, le deuxième élément solide ES2_2 comprend un deuxième dispositif DISP2_2 de mesure de distances inter-dispositifs, et le troisième élément solide ES3_2 comprend un troisième dispositif DISP3_2 de mesure de distances inter-dispositifs. Ainsi le système permet de déterminer les distances d12_2, d13_2 et d23_2 séparant respectivement les premier et deuxième dispositifs DISP 1_2 et DISP2_2, les premier et troisième dispositifs DISP 1_2 et DISP3_2, et les deuxième et troisième dispositifs DISP 2_2 et DISP3_2.

Ces distances d12_2, d13_2 et d23_2 sont délivrées par l'un des deux ou les deux, par exemple par transmission sans fil, à un module de calcul CALC pouvant être disposé sur la deuxième chaîne articulée CA_2. Le module de calcul CALC est capable de calculer des informations représentatives du mouvement de la deuxième chaîne articulée CA_2, à partir des mesures transmises par les dispositifs de mesure de distances inter-dispositifs DISP1_2, DISP2_2 et DISP3_2.

Ces informations peuvent être mémorisées dans un module de mémorisation MEM, et transmises par un module de transmission TR, soit sensiblement en temps réel, soit après la fin d'un déplacement de la deuxième chaîne articulée CA_2, par exemple à une unité de commande électronique externe capable, à partir de ces informations, de reconstruire ou déterminer le mouvement de la deuxième chaîne articulée CA_2. Dans le cas d'un humain ou d'un robot humanoïde, le post-traitement effectué peut intégrer un modèle permettant de détecter la pose des pieds et donc le mouvement global d'une personne ou d'un robot humanoïde qui marche ou court.

Sur l'exemple de la figure 2, les trois dispositifs DISP1_2, DISP2_2 et DISP3_2 sont disposés de sorte que la somme, pour l'ensemble des dispositifs DISP1_2, DISP2_2 et DISP3_2, des distances séparant un dispositif DISP1_2, DISP2_2, DISP3_2 de l'articulation ou des articulations ART1_2, ART2_2 liées à l'élément solide ES1_2, ES2_2, ES3_2 sur lequel est monté le dispositif DISP1_2, DISP2_2, DISP3_2, soit maximale.

Dans une variante déjà évoquée de manière générale précédemment, si les articulations ART1_2 et ART2_2 avaient deux degrés de liberté, deux dispositifs de mesure de distances inter-dispositifs seraient disposés sur chacun des éléments solides ES1_2, ES2_2 et ES3_2, de sorte qu'une articulation ART1_2 ou ART2_2, et les deux dispositifs d'un même élément solide relié à l'articulation ne soient pas alignés.

Dans une autre variante déjà évoquée de manière générale précédemment, si les articulations ART1_2 et ART2_2 avaient trois degrés de liberté, trois dispositifs de mesure de distances inter-dispositifs seraient disposés sur chacun des éléments solides ES1_2, ES2_2 et ES3_2, de sorte que l'articulation ART1_2 ou ART2_2, et les trois dispositifs d'un même élément solide relié à l'articulation ne soient pas coplanaires.

Sur la figure 3 est représenté un mode de réalisation d'un système selon un aspect de l'invention, dans lequel une troisième chaîne articulée CA_3 comprend quatre éléments solides ES1_3, ES2_3, ES3_3 et ES4_3, reliés dans cet ordre par des articulations ART1_3, ART2_3 et ART3_3 à un degré de liberté.

Les éléments solides de la chaîne articulée peuvent être de forme quelconque.

Dans la troisième chaîne articulée CA_3, le premier élément solide ES1_3 comprend un premier dispositif DISP1_3 de mesure le deuxième élément solide ES2_3 comprend un deuxième dispositif DISP2_3 de mesure de distances inter-dispositifs, le troisième élément solide ES3_3 comprend un troisième dispositif DISP3_3 de mesure de distances inter-dispositifs, et le quatrième élément solide ES4_3 comprend un quatrième dispositif DISP4_3 de mesure de distances inter-dispositifs. Ainsi le système permet de déterminer les distances d12_3, d13_3, d14_3, d23_3, d24_3, et d34_3 séparant respectivement les premier et deuxième dispositifs DISP1_3 et DISP2_3, les premier et troisième dispositifs DISP 1_3 et DISP3_3, les premier et quatrième dispositifs DISP1_3 et DISP4_3, les deuxième et troisième dispositifs DISP2_3 et DISP3_3, les deuxième et quatrième dispositifs DISP2_3 et DISP4_3, et les troisième et quatrième dispositifs DISP3_3 et DISP4_3

Ces distances d12_3, d13_3, d14_3, d23_3, d24_3, et d34_3 sont délivrées par l'un des deux ou les deux dispositifs concernés, par exemple par transmission sans fil, à un module de calcul CALC disposé sur la troisième chaîne articulée CA_3. Le module de calcul CALC est capable de calculer des informations représentatives du mouvement de la troisième chaîne articulée CA_3, à partir des mesures transmises par les dispositifs de mesure de distances inter-dispositifs DISP1_3, DISP2_3, DISP3_3 et DISP4_3.

Ces informations peuvent être mémorisées dans un module de mémorisation MEM, et transmises par un module de transmission TR, soit sensiblement en temps réel, soit après la fin d'un déplacement de la troisième chaîne articulée CA_3, par exemple à une unité de commande électronique externe capable, à partir de ces informations, de reconstruire ou déterminer le mouvement de la troisième chaîne articulée CA_3. Dans le cas d'un humain ou d'un robot humanoïde, le post-traitement effectué peut intégrer un modèle permettant de détecter la pose des pieds et donc le mouvement global d'une personne ou d'un robot humanoïde qui marche ou court.

Sur l'exemple de la figure 3, les quatre dispositifs DISP1_3, DISP2_3, DISP3_3 et DISP4_3 sont respectivement disposés sensiblement au milieu des éléments solides ES1_3, ES2_3, ES3_3 et ES4_3. En variante, les dispositifs DISP1_3 et DISP4_3 peuvent être disposés aux extrémités distales des articulations ART1_3 et ART3_3.

On notera que dans tous les exemples de réalisation pré-cités, la distance séparant deux dispositifs de mesure de distance inter-dispositifs peut être déterminée par des moyens de détermination de distance distincts des dispositifs de mesure. Ces moyens de détermination de distance utilisent alors des mesures fournies par au moins un des dispositifs de mesure. Ces moyens de détermination de distance peuvent ainsi être déportés par rapport aux dispositifs de mesure. Ces moyens de détermination de distance peuvent être placés sur la chaine articulée ou à distance de celle-ci.

Pour une chaîne articulée comprenant au moins un dispositif de mesure par élément solide de la chaîne articulée et par degré de liberté en rotation d'une articulation liée à l'élément solide, lesdits dispositifs de mesure sont disposés sur l'élément solide de sorte que le vecteur reliant l'articulation à un dispositif soit linéairement indépendant du ou des vecteurs reliant l'articulation aux autres dispositifs de mesure.

On peut également considérer qu'une articulation a non seulement jusqu'à trois degrés de liberté en rotation, mais également jusqu'à trois degrés de liberté en translation.

Pour une chaîne articulée dépourvue de portion fermée, et comprenant au moins un dispositif de mesure de distances inter-dispositifs par élément solide de la chaîne articulée et par degré de liberté en rotation ou en translation, d'une articulation liée à l'élément solide, les dispositifs de mesure sont disposés sur l'élément solide de sorte que la relation suivante soit vérifiée : $NEQ \geq NVAR$

dans laquelle :

NEQ représente le nombre d'équations reliant aux mesures de distance les variables de position inconnues de l'extrémité de chaque segment mû par une articulation de la chaîne articulée ; et

NVAR représente le nombre desdites variables de position inconnues. Le nombre de relations géométriques NEQ peut s'écrire sous la forme:

$$NEQ = \sum_{i=1}^{NCAPT-1} i$$ , NCAPT étant le nombre total de dispositifs de mesure présents sur la chaîne articulée. En outre, le nombre NVAR de variables de positions à déterminer peut s'écrire sous la forme:

$$NVAR = \sum_{j=1}^{NA} NDDL_j$$ , NA étant le nombre d'articulations de la chaîne articulée,

et $NDDL_j$ étant le nombre de degrés de liberté de chaque articulation. Le nombre de degrés de liberté d'une articulation est compris entre un et six, i.e. jusqu'à trois en rotation et trois en translation.

Dans le cas particulier pour lequel NEQ=NVAR, on peut avoir plusieurs solutions possible, et aisément déterminer laquelle est la bonne. Lorsque NEQ > NVAR, une unique solution est déterminé pour reconstruire la position de la chaîne articulée.

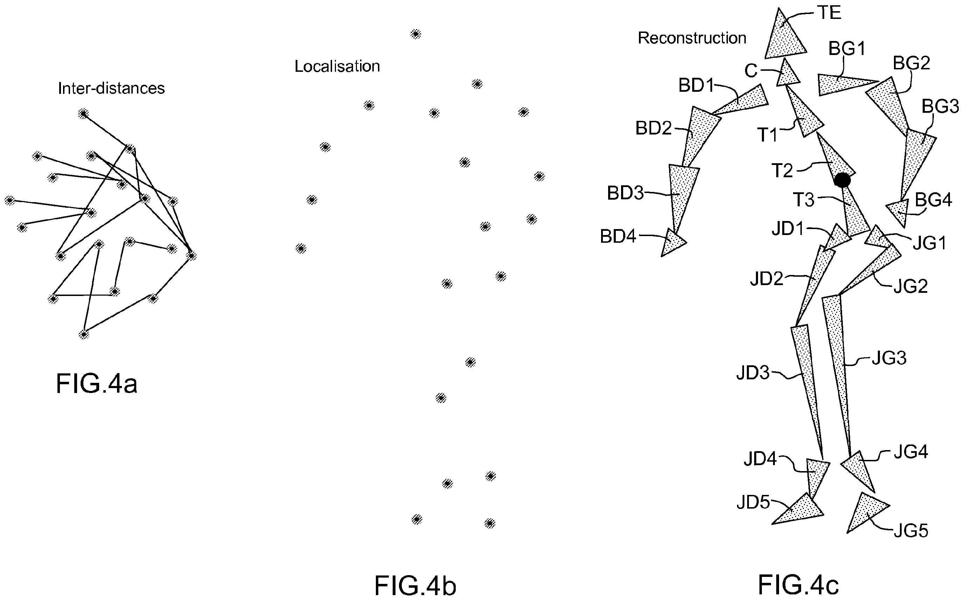

Dans l'ensemble des modes réalisations cités, il est possible de ne tenir compte, dans la reconstruction du mouvement de la chaîne articulée par l'unité de commande électronique externe, à partir des informations représentatives du mouvement de la chaîne articulée élaborées par le module de calcul CALC et transmises par le module de transmission TR, que des distances inter-dispositifs séparant deux dispositifs liés à des éléments solides respectifs liés par une articulation, comme illustré sur les figures 4a, 4b et 4c

La figure 4a illustre des distances mesurées ou déterminées à partir de mesures fournies par des dispositifs de mesure de distances inter-dispositifs disposés sur un humain ou un robot humanoïde.

La figure 4b illustre les informations calculées par le module de calcul CALC, qui servent à l'unité de commande électronique externe, ou dans d'autres modes de réalisation directement au module de calcul CALC, pour utiliser avec un filtrage de Kalman, une optimisation, ou un réseau de neurones, pour reconstruire le mouvement de la chaîne articulée.

Les états définissant la posture ou la disposition de la chaîne articulée sont, de manière avantageuse, les coordonnées définissant la rotation de l'articulation, tels les angles d'Euler, de cardan, ou les quaternions. Les positions Pr = (prx,pry,prz) des dispositifs doivent être mesurées ou estimées pour une posture connue ou de référence de la chaîne articulée. Les coordonnées des dispositifs s'écrivent ensuite comme une fonction des rotation des articulations P = MPr = (px,py,pz), M étant la matrice de rotation, variable, permettant de passer de la posture de référence à la posture à estimer (il y a une matrice par élément solide). Les distances inter-dispositifs sont liées aux positions par la relation: $d12^2 = (px1-px2)^2 + (py1-py2)^2 + (pz1-pz2)^2$. Connaissant les distances inter-dispositifs, l'inversion de chaque matrice M peut utiliser des connaissances sur le nombre de degrés de liberté de chaque articulation, ainsi que sur les butées articulaires comme l'angle du coude ne varie que de 180°. Cela peut aider l'inversion, par exemple en accélérant la convergence ou en permettant de minimiser le nombre de capteurs. Une fois la posture estimée, sous la forme d'un ensemble d'angles, on peut éventuellement en déduire les coordonnées de n'importe quel point de la chaîne articulée.

Les états définissant une posture peuvent être les positions des dispositifs ou de certains points particuliers des éléments solides (mais alors on n'utilise pas forcément les connaissances de la structure articulée). Dans ce cas on estime ces positions à partir des distances, par exemple par triangulation. A partir de ces positions estimées on détermine ensuite la posture globale de la chaîne articulée, par exemple en tenant compte de connaissances sur le nombre de degrés de liberté et les butées articulaires.

Enfin, la figure 4c, illustre la reconstruction du mouvement, affichée virtuellement au moyen d'une représentation graphique dans laquelle le corps, considéré comme une chaîne articulée, est décomposé en un ensemble d'éléments solides articulés les uns par rapport aux autres.

L'ensemble des éléments solides peut, par exemple être représentés comme illustré sur la figure 4c, en une tête TE, un cou C, un ensemble d'éléments de tronc T1, T2, T3, un ensemble d'éléments de bras gauche BG1, BG2, BG3, BG4, un ensemble d'éléments de bras droit BD1, BD2, BD3, BD4, un ensemble d'éléments de jambe gauche JG1, JG2, JG3, JG4, JG5, et un ensemble d'éléments de jambe droite JD1, JD2, JD3, JD4, JD5.

L'unité de commande électronique externe peut, à partir des informations fournies par le module de calcul CALC, reconstruire et simuler visuellement le mouvement de la chaîne articulée, en déduisant les angles entre les divers éléments solides de la chaîne articulée.

Dans le cas du corps humain, l'épaule, ainsi que la hanche, est souvent considérée comme une articulation à trois degrés de liberté, et le coude, ainsi que le genou, comme une articulation à un degré de liberté. Aussi, il est intéressant de placer au moins trois ou quatre dispositifs sur le torse, et trois ou quatre sur les hanches, bien répartis de manière à maximiser les distances inter-dispositifs et entre les dispositifs et les articulations, et de placer un dispositif au milieu du bras entre l'épaule et le coude, au milieu de la cuisse, au niveau du poignet, et au niveau de la cheville.

La présente invention permet, à coût réduit, de proposer un système autonome de détermination d'informations représentatives du mouvement d'une chaîne articulée.

**Revendications**

1. Système autonome de détermination d'informations représentatives du mouvement d'une chaîne articulée (CA_1, CA_2, CA_3) comprenant au moins deux éléments solides (ES1_1, ES2_1, ES1_2, ES2_2, ES3_2, ES1_3, ES2_3, ES3_3, ES4_3) et au moins une articulation (ART1_1, ART1_2, ART2_2, ART1_3, ART2_3, ART3_3) reliant lesdits deux éléments, ledit système étant **caractérisé en ce qu'**il comprend :

   - au moins deux dispositifs (DISP1_1, DISP2_1, DISP1_2, DISP2_2, DISP3_2, DISP1_3, DISP2_3, DISP3_3, DISP4_3) de mesure de distances inter-dispositifs, montés fixement sur au moins deux éléments distincts de ladite chaîne articulée et adaptés pour transmettre les mesures effectuées ;
   - des moyens de détermination d'au moins une distance séparant deux dispositifs de mesure à partir d'au moins une mesure fournie par un dispositif de mesure ; et
   - des moyens de calculs (CALC), adaptés pour calculer des informations représentatives du mouvement de ladite chaîne articulée à partir des distances transmises par lesdits moyens de détermination de distances.

2. Système selon la revendication 1, dans lequel lesdits moyens de détermination de distances et lesdits moyens de calcul sont montés sur ladite chaîne articulée.

3. Système selon l'une des revendications 1 ou 2, dans lequel au moins un desdits dispositifs (DISP1_1, DISP2_1, DISP1_2, DISP2_2, DISP3_2, DISP1_3, DISP2_3, DISP3_3, DISP4_3) de mesure de distances inter-dispositifs est adapté pour émettre et/ou recevoir des données.

4. Système selon l'une quelconque des revendications 1 à 3, comprenant en outre au moins un accéléromètre et/ou un gyromètre et/ou un magnétomètre fournissant des mesures complémentaires utilisées par les moyens de calcul.

5. Système selon l'une des revendications 1 à 4, comprenant au moins un dispositif (DISP1_1, DISP2_1, DISP1_2, DISP2_2, DISP3_2, DISP1_3, DISP2_3, DISP3_3, DISP4_3) optique de mesure de distances inter-dispositifs.

6. Système selon l'une des revendications 1 à 5, comprenant des moyens de mémorisation (MEM), montés sur ladite chaîne articulée, adaptés pour mémoriser lesdites informations représentatives du mouvement de ladite chaîne articulée délivrées par lesdits moyens de calcul (CALC), ou pour mémoriser directement ladite au moins une distance .

7. Système selon l'une des revendications 1 à 6, dans lequel lesdits dispositifs (DISP1_1, DISP2_1, DISP1_2, DISP2_2, DISP3_2, DISP1_3, DISP2_3, DISP3_3, DISP4_3) de mesures sont montés sur lesdits éléments solides (ES1_1, ES2_1, ES1_2, ES2_2, ES3_2, ES1_3, ES2_3, ES3_3, ES4_3) de ladite chaîne articulée de sorte que, pour au moins une articulation, la somme, pour l'ensemble desdits dispositifs de mesure montés sur un élément solide lié à ladite articulation, des distances séparant un dispositif de mesure et l'articulation, soit maximale.

8. Système selon l'une des revendications 1 à 7, dans lequel lesdits dispositifs (DISP1_1, DISP2_1, DISP1_2, DISP2_2, DISP3_2, DISP1_3, DISP2_3, DISP3_3, DISP4_3) de mesures sont montés sur lesdits éléments solides (ES1_1, ES2_1, ES1_2, ES2_2, ES3_2, ES1_3, ES2_3, ES3_3, ES4_3) de ladite chaîne articulée de sorte que les distances entre des dispositifs disposés sur un même élément solide soient maximales.

9. Système selon l'une des revendications 1 à 6, dans lequel, ladite chaîne articulée comprend un élément solide lié à deux articulations, au moins un dispositif (DISP1_2, DISP2_2, DISP3_2, DISP1_3, DISP2_3, DISP3_3, DISP4_3) de mesure étant disposé sensiblement au milieu dudit élément solide.

10. Système selon l'une des revendications 1 à 6, comprenant au moins un dispositif de mesure par élément solide de la chaîne articulée et par degré de liberté d'une articulation liée à l'élément solide, ladite chaîne étant dépourvue de portion fermée, lesdits dispositifs (DISP1_1, DISP2_1, DISP1_2, DISP2_2, DISP3_2, DISP1_3, DISP2_3, DISP3_3, DISP4_3) de mesure étant disposés sur l'élément solide de sorte que la relation suivante soit vérifiée : $NEQ \geq NVAR$
   dans laquelle :

   $NEQ$ représente le nombre d'équations reliant aux mesures de distance les variables de position inconnues de l'extrémité de chaque segment mû par une articulation de la chaîne articulée ; et
   $NVAR$ représente le nombre desdites variables de position inconnues.

11. Système selon la revendication 10, comprenant au moins un élément solide relié à une articulation muni d'au moins deux dispositifs de mesure, lesdits dispositifs de mesure étant disposés sur ledit élément solide de sorte qu'ils évitent de former une droite avec l'articulation.

12. Système selon la revendication 10, comprenant au moins un élément solide relié à une articulation et muni d'au moins trois dispositifs de mesure, lesdits dispositifs de mesure étant disposés sur ledit élément solide de sorte qu'ils évitent de former un plan avec l'articulation.

13. Système selon l'une des revendications 1 à 6, comprenant au moins un dispositif de mesure par élément solide de la chaîne articulée et par degré de liberté en rotation d'une articulation liée à l'élément solide, lesdits dispositifs de mesure sont disposés sur l'élément solide de sorte que le vecteur reliant de l'articulation à un dispositif soit linéairement indépendant du ou des vecteurs reliant l'articulation aux autres dispositifs de mesure.

14. Système selon l'une des revendications précédentes, dans lequel lesdits dispositifs (DISP1_1, DISP2_1, DISP1_2, DISP2_2, DISP3_2, DISP1_3, DISP2_3, DISP3_3, DISP4_3) de mesure comprennent une distance de seuil maximale mesurable.

15. Système selon l'une des revendications précédentes, comprenant, en outre, des moyens de transmission (TR), montés sur ladite chaîne articulée, pour transmettre des informations représentatives du mouvement de ladite chaîne articulée ou des distances inter-dispositifs déterminées mémorisées dans lesdits moyens de mémorisation.

16. Système selon l'une des revendications précédentes, dans lequel lesdits dispositifs (DISP1_1, DISP2_1, DISP1_2, DISP2_2, DISP3_2, DISP1_3, DISP2_3, DISP3_3, DISP4_3) de mesure et/ou lesdits moyens de calcul (CALC), et/ou lesdits moyens de mémorisation (MEM), et/ou lesdits moyens de transmission (TR) sont adaptés pour fonctionner sur un corps vivant considéré comme ladite chaîne articulée.

17. Procédé de détermination d'informations représentatives du mouvement d'une chaîne articulée (CA_1, CA_2, CA_3) comprenant au moins deux éléments solides (ES1_1, ES2_1, ES1_2, ES2_2, ES3_2, ES1_3, ES2_3, ES3_3, ES4_3) et au moins une articulation (ART1_1, ART1_2, ART2_2, ART1_3, ART2_3, ART3_3) reliant lesdits deux éléments, **caractérisé en ce qu'**il comprend les étapes suivantes :

- monter fixement au moins deux dispositifs de mesure de distances séparant deux dispositifs de mesure sur au moins deux éléments solides distincts de la chaîne articulée ;
- déterminer au moins une distance à partir d'au moins une mesure fournie par un dispositif de mesure ; et
- calculer des informations représentatives du mouvement de ladite chaîne articulée à partir des distances précédemment déterminées.

**Patentansprüche**

1. Autonomes System zum Bestimmen von Informationen, die Bewegungen einer Gelenkkette (CA_1, CA_2, CA_3) repräsentieren, die wenigstens zwei feste Elemente (ES1_1, ES2_1, ES1_2, ES2_2, ES3_2, ES1_3, ES2_3, ES3_3, ES4_3) und wenigstens ein die beiden Elemente verbindendes Gelenk (ART1_1, ART1_2, ART2_2, ART1_3, ART2_3, ART3_3) umfassen, wobei das System **dadurch gekennzeichnet ist, dass** es Folgendes umfasst:

- wenigstens zwei Vorrichtungen (DISP1_1, DISP2_1, DISP1_2, DISP2_2, DISP3_2, DISP1_3, DISP2_3, DISP3_3, DISP4_3) zum Messen von Abständen zwischen Vorrichtungen, die fest an wenigstens zwei verschiedenen Elementen der Gelenkkette montiert und zum Übertragen der erhaltenen Messwerte adaptiert sind;
- Mittel zum Bestimmen wenigstens eines Abstands, der zwei Messvorrichtungen voneinander trennt, auf der Basis von wenigstens einem von einer Messvorrichtung gelieferten Messwert; und
- Rechenmittel (CALC), ausgelegt zum Berechnen von Informationen, die die Bewegung der Gelenkkette repräsentieren, auf der Basis der von den Abstandsbestimmungsmitteln übertragenen Abstände.

2. System nach Anspruch 1, bei dem die Abstandsbestimmungsmittel und die Rechenmittel an der Gelenkkette montiert sind.

3. System nach Anspruch 1 oder 2, bei dem wenigstens eine der Vorrichtungen (DISP1_1, DISP2_1, DISP1_2, DISP2_2, DISP3_2, DISP1_3, DISP2_3, DISP3_3, DISP4_3) zum Messen von Abständen zwischen Vorrichtungen zum Senden und/oder Empfangen von Daten ausgelegt ist.

4. System nach einem der Ansprüche 1 bis 3, das ferner wenigstens einen Beschleunigungsmesser und/oder ein Gyrometer und/oder ein Magnetometer umfasst, die von den Rechenmitteln benutzte komplementäre Messwerte liefern.

5. System nach einem der Ansprüche 1 bis 4, das wenigstens eine optische Vorrichtung (DISP1_1, DISP2_1, DISP1_2, DISP2_2, DISP3_2, DISP1_3, DISP2_3, DISP3_3, DISP4_3) zum Messen von Abständen zwischen Vorrichtungen umfasst.

6. System nach einem der Ansprüche 1 bis 5, das Speichermittel (MEM) umfasst, die an der Gelenkkette montiert sind, ausgelegt zum Speichern der Informationen, die die Bewegung der Gelenkkette repräsentieren, geliefert von den Rechenmitteln (CALC), oder zum direkten Speichern des wenigstens einen Abstands.

7. System nach einem der Ansprüche 1 bis 6, wobei die Messvorrichtungen (DISP1_1, DISP2_1, DISP1_2, DISP2_2, DISP3_2, DISP1_3, DISP2_3, DISP3_3, DISP4_3) so an den festen Elementen (ES1_1, ES2_1, ES1_2, ES2_2, ES3_2, ES1_3, ES2_3, ES3_3, ES4_3) der Gelenkkette montiert sind, dass für wenigstens ein Gelenk die Summe, für alle an einem mit dem Gelenk verbundenen festen Element montierten Messvorrichtungen, der eine Messvorrichtung und das Gelenk trennenden Abstände maximal ist.

8. System nach einem der Ansprüche 1 bis 7, wobei die Messvorrichtungen (DISP1_1, DISP2_1, DISP1_2, DISP2_2, DISP3_2, DISP1_3, DISP2_3, DISP3_3, DISP4_3) an den festen Elementen (ES1_1, ES2_1, ES1_2, ES2_2, ES3_2, ES1_3, ES2_3, ES3_3, ES4_3) der Gelenkkette so montiert sind, dass die Abstände zwischen an einem selben festen Element angeordneten Vorrichtungen maximal sind.

9. System nach einem der Ansprüche 1 bis 6, bei dem die Gelenkkette ein mit zwei Gelenken verbundenes festes Element umfasst, wobei wenigstens eine Messvorrichtung (DISP1_2, DISP2_2, DISP3_2, DISP1_3, DISP2_3, DISP3_3, DISP4_3) im Wesentlichen in der Mitte des festen Elements angeordnet ist.

10. System nach einem der Ansprüche 1 bis 6, das wenigstens eine Messvorrichtung pro festes Element der Gelenkkette und pro Freiheitsgrad eines mit dem festen Element verbundenen Gelenks umfasst, wobei die Kette keinen geschlossenen Teil hat, wobei die Messvorrichtungen (DISP1_1, DISP2_1, DISP1_2, DISP2_2, DISP3_2, DISP1_3, DISP2_3, DISP3_3, DISP4_3) auf dem festen Element so angeordnet sind, dass die folgende Relation verifiziert wird: NEQ ≥ NVAR
wobei:

NEQ die Anzahl von Gleichungen repräsentiert, die mit den Abstandsmesswerten die unbekannten Positionsvariablen des Endes jedes Segments verbinden, das durch ein Gelenk der Gelenkkette bewegt wird; und
NVAR die Anzahl der unbekannten Positionsvariablen repräsentiert.

11. System nach Anspruch 10, das wenigstens ein festes Element umfasst, das mit einem Gelenk verbunden ist, das mit wenigstens zwei Messvorrichtungen ausgestattet ist, wobei die Messvorrichtungen auf dem festen Element so angeordnet sind, dass die Bildung einer Geraden mit dem Gelenk vermieden wird.

12. System nach Anspruch 10, das wenigstens ein festes Element umfasst, das mit einem Gelenk verbunden und mit wenigstens drei Messvorrichtungen ausgestattet ist, wobei die Messvorrichtungen auf dem festen Element so angeordnet sind, dass die Bildung einer Ebene mit dem Gelenk vermieden wird.

13. System nach einem der Ansprüche 1 bis 6, das wenigstens eine Messvorrichtung pro festes Element der Gelenkkette und pro Drehfreiheitsgrad eines Gelenks umfasst, das mit dem festen Element verbunden ist, wobei die Messvorrichtungen auf dem festen Element so angeordnet sind, dass der das Gelenk mit einer Vorrichtung verbindende Vektor linear unabhängig von den ein oder mehreren Vektoren ist, die das Gelenk mit den anderen Messvorrichtungen verbindet.

14. System nach einem der vorherigen Ansprüche, bei dem die Messvorrichtungen (DISP1_1, DISP2_1, DISP1_2, DISP2_2, DISP3_2, DISP1_3, DISP2_3, DISP3_3, DISP4_3) einen maximalen messbaren Schwellenabstand haben.

15. System nach einem der vorherigen Ansprüche, das ferner Übertragungsmittel (TR) umfasst, die an der Gelenkkette montiert sind, zum Übertragen von Informationen, die die Bewegung der Gelenkkette oder bestimmte Abstände zwischen Vorrichtungen repräsentieren, die in den Speichermitteln gespeichert sind.

16. System nach einem der vorherigen Ansprüche, wobei die Messvorrichtungen (DISP1_1, DISP2_1, DISP1_2, DISP2_2, DISP3_2, DISP1_3, DISP2_3, DISP3_3, DISP4_3) und/oder die Rechenmittel (CALC) und/oder die Speichermittel (MEM) und/oder die Übertragungsmittel (TR) zum Arbeiten an einem lebenden Körper ausgelegt sind, der als die Gelenkkette angesehen wird.

17. Verfahren zum Bestimmen von Informationen, die die Bewegung einer Gelenkkette (CA_1, CA_2, CA_3) repräsentieren, die wenigstens zwei feste Elemente (ES1_1, ES2_1, ES1_2, ES2_2, ES3_2, ES1_3, ES2_3, ES3_3, ES4_3) und wenigstens ein die beiden Elemente verbindendes Gelenk (ART1_1, ART1_2, ART2_2, ART1_3, ART2_3, ART3_3) umfasst, **dadurch gekennzeichnet, dass** es die folgenden Schritte beinhaltet:

- festes Montieren von wenigstens zwei Vorrichtungen zum Messen von Abständen, die zwei Messvorrichtungen trennen, an wenigstens zwei verschiedenen festen Elementen der Gelenkkette;
- Bestimmen wenigstens eines Abstands auf der Basis von wenigstens einem Messwert, der von einer Messvorrichtung geliefert wird; und
- Berechnen von Informationen, die die Bewegung der Gelenkkette repräsentieren, auf der Basis der zuvor bestimmten Abstände.

## Claims

1. An autonomous system for determining items of information representative of the movement of an articulated chain (CA_1, CA_2, CA_3) comprising at least two solid elements (ES1_1, ES2_1, ES1_2, ES2_2, ES3_2, ES1_3, ES2_3, ES3_3, ES4_3) and at least one articulation (ART1_1, ART1_2, ART2_2, ART1_3, ART2_3, ART3_3) connecting said two elements, said system being **characterized in that** it comprises:

- at least two devices (DISP1_1, DISP2_1, DISP1_2, DISP2_2, DISP3_2, DISP1_3, DISP2_3, DISP3_3, DISP4_3) for measuring inter-device distances, mounted fixedly on at least two distinct elements of said articulated chain and suitable for transmitting the measurements made;
- means for determining at least one distance separating two measuring devices based on at least one measurement supplied by a measuring device; and
- calculation means (CALC) suitable for calculating items of information representative of the movement of said articulated chain based on the distances transmitted by said distance determination means.

2. The system according to Claim 1, wherein said distance determination means and said calculation means are mounted on said articulated chain.

3. The system according to either of Claims 1 or 2, wherein at least one of said devices (DISP1_1, DISP2_1, DISP1_2, DISP2_2, DISP3_2, DISP1_3, DISP2_3, DISP3_3, DISP4_3) for measuring inter-device distances is suitable for emitting and/or receiving data.

4. The system according to any of Claims 1 to 3, also comprising at least one accelerometer and/or one gyrometer and/or one magnetometer supplying complementary measurements used by the calculation means.

5. The system according to any of Claims 1 to 4, comprising at least one optical device (DISP1_1, DISP2_1, DISP1_2, DISP2_2, DISP3_2, DISP1_3, DISP2_3, DISP3_3, DISP4_3) for measuring inter-device distances.

6. The system according to any of Claims 1 to 5, comprising storage means (MEM), mounted on said articulated chain, suitable for storing said items of information representative of the movement of said articulated chain delivered by said calculation means (CALC), or for directly storing said at least one distance.

7. The system according to any of Claims 1 to 6, wherein said measuring devices (DISP1_1, DISP2_1, DISP1_2, DISP2_2, DISP3_2, DISP1_3, DISP2_3, DISP3_3, DISP4_3) are mounted on said solid elements (ES1_1, ES2_1, ES1_2, ES2_2, ES3_2, ES1_3, ES2_3, ES3_3, ES4_3) of said articulated chain so that, for at least one articulation, the sum, for all of said measuring devices mounted on a solid element linked to said articulation, of the distances separating a measuring device and the articulation, is maximal.

8. The system according to any of Claims 1 to 7, wherein said measuring devices (DISP1_1, DISP2_1, DISP1_2, DISP2_2, DISP3_2, DISP1_3, DISP2_3, DISP3_3, DISP4_3) are mounted on said solid elements (ES1_1, ES2_1, ES1_2, ES2_2, ES3_2, ES1_3, ES2_3, ES3_3, ES4_3) of said articulated chain so that the distances between devices placed on one and the same solid element are maximal.

9. The system according to any of Claims 1 to 6, wherein said articulated chain comprises a solid element linked to two articulations, at least one measuring device (DISP1_2, DISP2_2, DISP3_2, DISP1_3, DISP2_3, DISP3_3, DISP4_3) being placed substantially in the middle of said solid element.

10. The system according to any of Claims 1 to 6, comprising at least one measuring device per solid element of the articulated chain and per degree of freedom of an articulation linked to the solid element, said chain having no closed portion, said measuring devices (DISP1_1, DISP2_1, DISP1_2, DISP2_2, DISP3_2, DISP1_3, DISP2_3, DISP3_3, DISP4_3) being placed on the solid element so that the following relation is verified: NEQ ≥ NVAR, wherein

NEQ represents the number of equations linking to the distance measurements the unknown position variables of the end of each segment moved by an articulation of the articulated chain; and NVAR represents the number of said unknown position variables.

11. The system according to Claim 10, comprising at least one solid element linked to an articulation furnished with at least two measuring devices, said measuring devices being placed on said solid element so that they avoid forming a straight line with the articulation.

12. The system according to Claim 10, comprising at least one solid element linked to an articulation and furnished with at least three measuring devices, said measuring devices being placed on said solid element so that they avoid forming a plane with the articulation.

13. The system according to any of Claims 1 to 6, comprising at least one measuring device per solid element of the articulated chain and per degree of freedom in rotation of an articulation linked to the solid element, said measuring devices are placed on the solid element so that the vector linking the articulation to a device is linearly independent of the vector or vectors linking the articulation to the other measuring devices.

14. The system according to any of the preceding claims, wherein said measuring devices (DISP1_1, DISP2_1, DISP1_2, DISP2_2, DISP3_2, DISP1_3, DISP2_3, DISP3_3, DISP4_3) comprise a measurable maximal threshold distance.

15. The system according to any of the preceding claims, also comprising transmission means (TR) mounted on said articulated chain in order to transmit items of information representative of the movement of said articulated chain or of the determined inter-device distances stored in said storage means.

16. The system according to any of the preceding claims, wherein said measuring devices (DISP1_1, DISP2_1, DISP1_2, DISP2_2, DISP3_2, DISP1_3, DISP2_3, DISP3_3, DISP4_3) and/or said calculation means (CALC), and/or said storage means (MEM), and/or said transmission means (TR) are suitable for operating on a living body considered to be said articulated chain.

17. A method for determining items of information representative of the movement of an articulated chain (CA_1, CA_2, CA_3) comprising at least two solid elements (ES1_1, ES2_1, ES1_2, ES2_2, ES3_2, ES1_3, ES2_3, ES3_3, ES4_3) and at least one articulation (ART1_1, ART1_2, ART2_2, ART1_3, ART2_3, ART3_3) linking said two elements, **characterized in that** it comprises the following steps:

- fixedly mounting at least two distance-measuring devices separating two measuring devices on at least two distinct solid elements of the articulated chain;
- determining at least one distance based on at least one measurement supplied by a measuring device; and
- calculating items of information representative of the movement of said articulated chain based on the previously-determined distances.

FIG.1

FIG.1a

FIG.2

FIG.3

Inter-distances

FIG.4a

Localisation

FIG.4b

Reconstruction

TE
BG1
BG2
BG3
BG4
JG1
JG2
JG3
JG4
JG5
C
T1
T2
T3
JD1
JD2
JD3
JD4
JD5
BD1
BD2
BD3
BD4

FIG.4c

**EP 2 303 522 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 357774 A1
- US 20030215130 A1
- US 200500883333 A1
- FR 2897680

**Littérature non-brevet citée dans la description**

- **L. HERDA ; P. FUA ; R. PLÄNKERS ; R. BOULIC ; D. THALMANN.** Skeleton-Based Motion Capture for Robust Reconstruction of Human Motion. *Computer Graph lab (LIG), EPFL - web 01/2000*
- **C. THEOBALT ; E. AGUIAR ; M. MAGNOR ; H. THEISEL ; H-P. SEIDEL.** Marker-free Kinematic Skeleton Estimation from Sequences of Volume Data. *MPI Informatik*